# EUROPÄISCHE PATENTSCHRIFT

(11) **EP 2 448 811 B1**
(45) Veröffentlichungstag und Bekanntmachung des Hinweises auf die Patenterteilung: **09.03.2016**
(21) Anmeldenummer: 09804007.4
(22) Anmeldetag: 10.12.2009
(51) Int. Cl.: B62J 11/00, B62J 6/00, B62J 6/18, B60R 16/00, H01R 13/00, H01R 13/26

(54) **ANORDNUNG ZUR VERBINDUNG VON ANBAUTEILEN MIT EINEM FAHRZEUG**
DEVICE FOR ATTACHING ACCESSORIES WITH A VEHICLE
DISPOSITIF POUR ATTACHER DES ACCESSOIRES AVEC UN VÉHICULE

(30) Priorität: 30.06.2009 DE 202009008968 U; 29.10.2009 WO PCT/EP2009/007758
(43) Veröffentlichungstag der Anmeldung: 09.05.2012
(73) Patentinhaber: Mühlberger GmbH, 50677 Köln (DE)
(72) Erfinder: MÜHLBERGER, Louis, 50677 Köln (DE)
(74) Vertreter: Oberwalleney, Stephan
(86) Internationale Anmeldenummer: PCT/EP2009/008846
(87) Internationale Veröffentlichungsnummer: WO 2011/000398

(56) Entgegenhaltungen:
- EP-A1- 1 520 773
- EP-A2- 1 504 987
- EP-A2- 1 506 915
- WO-A1-2009/039910
- WO-A2-2006/122280
- GB-A- 2 355 868
- US-A- 4 280 062
- US-A- 6 104 099
- US-A1- 2005 014 408
- US-B1- 6 695 621

## Beschreibung

Die Erfindung betrifft eine Anordnung zur Verbindung von Anbauteilen mit einem Fahrzeug, insbesondere mit einem einspurigen Fahrzeug, wobei die Anordnung mindestens ein dem Anbauteil zugeordnetes Schiebeteil aufweist, welches mit mindestens einer Aufnahmevorrichtung reversibel verbindbar ist, sowie ein Fahrzeug, insbesondere ein einspuriges Fahrzeug, mit mindestens einer Aufnahmevorrichtung, wobei die Aufnahmevorrichtung zur lösbaren Verbindung mit einem Schiebeteil vorgesehen ist, welches einem an dem Fahrzeug zu befestigenden Anbauteil zugeordnet ist.

Halterungen an Fahrrädern und ähnlichen Fahrzeugen für den Transport von Anbauteilen, wie Taschen und Körben, sowie zur Halterung von Schlössern, Pumpen und elektronischen Geräten sind bekannt, wobei die Halterungen auf die entsprechenden Anbauteile abgestimmt sind und in der Regel zur Befestigung am Fahrradrahmen, Sattel, Gepäckträger oder Lenker vorgesehen sind. Elektronische Geräte, wie beispielsweise ein sogenannter Fahrradcomputer zur Anzeige von Geschwindigkeit, Wegstrecke und ähnlichen Informationen weisen darüber hinaus eine elektrische Verkabelung, beispielsweise zu einem Signalgeber an der Vorderradgabel auf.

In der Patentschrift EP 1 520 773 B1 ist ein Haltesystem für verschiedene elektronische Fahrradbauelemente offenbart, welche durch ein Gehäuse an dem Fahrrad befestigt werden können und darüber hinaus elektrisch über Verbindungskabel verbunden werden können. Nachteilig ist, dass das Fahrrad nachträglich mit der Halterung ausgestattet wird und die entsprechende Verkabelung zur elektrischen Kontaktierung am Fahrradrahmen entlang verlegt werden muss.

Eine Aufgabe der Erfindung besteht daher darin, ein Fahrzeug selbst mit mindestens einer Anordnung zur Verbindung von Anbauteilen auszustatten, welche eine Herstellung einer elektrischen Verbindung durch Verkabelung vermeidet, sei es von dem Anbauteil oder von der Halterung aus.

Die Aufgabe wird durch den Gegenstand des unabhängigen Anspruchs 1 gelöst. In den Unteransprüchen sind bevorzugte Ausführungsformen und vorteilhafte Weiterbildungen angegeben.

Gegenstand der Erfindung ist ein Fahrzeug, insbesondere ein einspuriges Fahrzeug, mit mindestens einer Aufnahmevorrichtung, wobei die Aufnahmevorrichtung zur lösbaren Verbindung mit einem Schiebeteil vorgesehen ist, welches einem an dem Fahrzeug zu befestigenden Anbauteil zugeordnet ist. Die Aufnahmevorrichtung ist erfindungsgemäß in eine Struktur des Fahrzeugs mechanisch integriert, wobei die Aufnahmevorrichtung eine Schnittstelle zur elektrischen Kontaktierung eines innerhalb der Struktur des Fahrzeugs angeordneten elektrischen Leitungsnetzes des Fahrzeugs bildet, in welches die Schnittstelle integriert ist, wobei elektrische Leiterbahnen von der Aufnahmevorrichtung direkt in die Struktur des Fahrzeugs führen.

Ein Vorteil der erfindungsgemäß mechanisch und elektrisch in die Struktur des Fahrzeugs integrierten Aufnahmevorrichtung besteht darin, dass ein hohes Maß an Flexibilität bei der Anbringung von Anbauteilen, wie beispielsweise Taschen oder elektrischen Geräten gegeben ist. Die elektrisch integrierte Schnittstelle ermöglicht ein Anbringen von elektrischen Geräten über die Aufnahmevorrichtung ohne eine separate Verdrahtung. Die Gefahr einer elektrischen Fehlfunktion oder Unterbrechung der elektrischen Leitung wird dadurch vorteilhaft minimiert.

Eine vorzugsweise vorgesehene Anordnung zur Verbindung von Anbauteilen mit einem Fahrzeug, insbesondere mit einem einspurigen Fahrzeug weist mindestens ein dem Anbauteil zugeordnetes Schiebeteil auf, welches mit mindestens einer Aufnahmevorrichtung reversibel verbindbar ist. Als Anbauteil im Sinne der Erfindung gilt jedes am Fahrzeug anzubringende Gerät oder Objekt im weitesten Sinne, welches in der Regel nicht zu dem Fahrzeug selbst zu zählen ist, wie bei einem Fahrrad beispielsweise eine Tasche, Korb, Koffer oder dergleichen, eine Beleuchtung, ein Signalmittel, wie Blinker oder Horn, eine Batterie zur Speisung eines Bordnetzes, sowie Fahrradzubehör, wie ein Schloss, eine Pumpe, ein Mobilfunktelefon oder ein sogenannter Fahrradcomputer. Diese Anbauteile können gemäß der Erfindung mit Strom bzw. gegebenenfalls mit elektronischen Daten direkt aus der Struktur des Fahrrads versorgt werden bzw. Strom oder elektronische Daten in die Struktur einspeisen, wobei eine externe Verkabelung nicht erforderlich ist.

Die Aufnahmevorrichtung bildet erfindungsgemäß eine Schnittstelle zur elektrischen Kontaktierung eines innerhalb einer Struktur des Fahrzeugs angeordneten elektrischen Leitungsnetzes des Fahrzeugs, wobei die Aufnahmevorrichtung mechanisch in die Struktur des Fahrzeugs integriert ist. Als Struktur des Fahrzeugs gilt gemäß der Erfindung dessen Rahmen und/oder Karosserie, sowie regelmäßig damit verbundenen Bauteile, wie bei einem Fahrrad beispielsweise Sattelstange, Gabel, insbesondere Vorderbaugabel und Hinterbaugabel, Lenkstange, Vorbau, Lenker, Pedale, Gepäckträger und ähnliche, das Fahrzeug selbst ausmachende Bauteile. Unter dem Begriff mechanisch integriert ist im Sinne der Erfindung zu verstehen, dass eine mechanisch feste, unlösbare Verbindung besteht, oder das ein Teil der Struktur des Fahrzeugs selbst als Aufnahmevorrichtung ausgeführt ist. Als Möglichkeiten für eine mechanische Integration der Aufnahmevorrichtung in die Struktur des Fahrzeugs kommen beispielsweise Verschweißen, Löten, eine Muffverbindung oder Klebverbindung in Frage.

Weiterhin erfindungsgemäß ist die Schnittstelle in das elektrische Leitungsnetz integriert. Dazu führen erfindungsgemäß elektrische Leiterbahnen von der Aufnahmevorrichtung direkt in die Struktur des Fahrzeugs hinein. Als Schnittstelle im Sinne der Erfindung gilt jede technische Vorrichtung, welche eine elektrisch leitende Verbindung von einer von der Struktur abgewandten äußeren Kontaktseite der Aufnahmevorrichtung in die Struktur des Fahrzeugs hinein zu dem dort angeordneten elektrischen Leitungsnetz bereitstellt, beispielsweise in Form von Steckern, welche mit dem Leitungsnetz an entsprechenden Steckkontakten verbunden werden können. Im Inneren der Struktur des Fahrzeugs, beispielsweise eines Fahrzeugrahmens, werden die elektrischen Leitungen weitergeführt bis zu einer Stromabnahme- oder Stromaufnahmestelle, beispielsweise einer Batterie, die an einer anderen Stelle der Struktur angeordnet sein kann.

Das Schiebeteil weist bevorzugt elektrische Kontakte auf, welche vorzugsweise mit entsprechenden Gegenkontakten der Schnittstelle der Aufnahmevorrichtung kontaktierbar sind, so dass das Anbauteil in einem verbundenen Zustand von Schiebeteil und Aufnahmevorrichtung mit der Schnittstelle elektrisch verbunden ist. Das Schiebeteil kann einstückig mit dem Anbauteil ausgeführt sein, oder in geeigneter Weise mit diesem verbunden sein. Der Fachmann erkennt, dass die Art der Zuordnung des Schiebeteils zu dem Anbauteil wesentlich von der Art des Anbauteils abhängig ist.

Die Aufnahmevorrichtung und das Schiebeteil können auch gemeinsam als Kupplungsvorrichtung bezeichnet werden. Die Kontakte des Schiebeteils und die Gegenkontakte der Aufnahmevorrichtung sind vorzugsweise schienenförmig gestaltet und erstrecken sich insbesondere in Einschubrichtung des Schiebeteils. Die Kontakte umfassen zumindest einen Plus- und Minuspol zur Übertragung von elektrischem Strom. Gegebenenfalls können weitere Kontakte zur Übertragung von elektronischen Daten vorgesehen sein. Die elektrischen Leitungen sind in das jeweilige Kupplungsteil integriert, d. h. sie verlaufen von den jeweiligen Kontakten als erstem Anschluss innerhalb des jeweiligen Kupplungsteils bis zum entsprechenden zweiten Anschluss. Die erfindungsgemäße Anordnung hat den Vorteil, dass praktisch an jeder Stelle des Fahrzeugs eine Aufnahmevorrichtung für ein Anbauteil zur Verfügung gestellt werden kann, welche ein Anschließen des Anbauteils an ein in der Struktur des Fahrzeugs verlaufendes Leitungsnetz ohne zusätzliche externe Verkabelung des Anbauteils ermöglicht.

Das elektrische Leitungsnetz weist bevorzugt Leitungen zur Spannungsversorgung und/oder Leitungen zur Signal- bzw. Datenübertragung auf. Weiterhin bevorzugt weist das elektrische Leitungsnetz Leitungen zur Spannungsversorgung eines elektrischen Antriebs des Fahrzeugs auf. Besonders bevorzugt ist in das Leitungsnetz mindestens eine Batterie einbindbar, welche in oder an der Fahrzeugstruktur angeordnet sein kann. Die Batterie ist bevorzugt mittels einer erfindungsgemäßen Anordnung und besonders bevorzugt in einem Anbauteil, insbesondere in einer Tasche, die innen einen Anschluss für die Batterie aufweist, an das Leitungsnetz angebunden. Die Batterie kann aber auch in einem Teil der Fahrzeugstruktur aufgenommen sein, beispielsweise in einem Rahmenteil des Fahrzeugs, und mit dem Leitungsnetz elektrisch verbunden sein. Nach einer möglichen Weiterbildung kann eine erfindungsgemäße Anordnung auch vorgesehen sein, um ein Ladegerät zum Aufladen der Batterie anzuschließen. Ein entsprechendes Ladegerät wäre dann mit einem Schiebeteil ausgestattet, das zum Laden der Batterie einfach in eines der Aufnahmevorrichtungen eingeschoben werden müsste.

Besonders bevorzugt ist das Anbauteil ein elektrisch zu betätigendes Teil. Beispielsweise kann vorteilhaft eine oder mehrere Bremsen des Fahrzeugs mittels der erfindungsgemäßen Anordnung befestigt sein, wobei die Bremse insbesondere elektrisch angesteuert und beispielsweise hydraulisch betätigt ist. Die Bremsung kann durch ein Sensorsignal und/oder durch einen Bediener gesteuert sein. Die Aufnahmevorrichtung für eine Bremse ist vorzugsweise im Ansatz der Gabelspreizung angeordnet, wo eine optimale Bremswirkung erzielt werden kann. Ein weiteres Beispiel ist ein Ständer für Zweiräder, welcher mit der erfindungsgemäßen Anordnung am Fahrzeug angeordnet ist. Dieser kann vorteilhafterweise elektrisch betätigt aus- und einfahren. Ein weiteres Beispiel für ein Anbauteil ist ein Sattel, welcher mittels der erfindungsgemäßen Anordnung an einer Sattelstütze befestigt bzw. befestigbar ist. Alternativ oder zusätzlich kann auch die Sattelstütze derart am Fahrradrahmen befestigt sein. Die Anbindung elektrischer Komponenten in dem Sattel an das Leitungsnetz ist besonders vorteilhaft. Sensorsignale von Belastungssensoren im Sattel können beispielsweise übertragen werden, welche beispielsweise eine veränderbare Luftpolsterung des Sattels dazu veranlassen, eine Anpassung an die aktuelle Belastungssituation vorzunehmen. Zum Betätigen von Pumpen zum Aufpumpen der Luftpolster oder von Ventilen zum Ablassen von Luft wird Strom aus dem Leitungsnetz benötigt, welcher vorteilhaft über die erfindungsgemäße Anordnung übertragen werden kann. Ebenfalls bevorzugt ist eine Beheizung des Sattels vorgesehen, welche durch einen Benutzer ein- und ausschaltbar bzw. regelbar ist, wobei die Signale zur Steuerung der Beheizung ebenso wie der zur Beheizung benötigte elektrische Strom über das Leitungsnetz und die erfindungsgemäße Anordnung zu dem Sattel übertragen werden.

Gemäß einer bevorzugten Ausführungsform ist das Schiebeteil in eine Hinterschneidung der Aufnahmevorrichtung einschiebbar und darin federnd verrastbar, wodurch vorteilhaft eine formschlüssige, sichere und lösbare Verbindung herstellen lässt.

Gemäß einer weiteren bevorzugten Ausführungsform weist das Schiebeteil und/oder die Aufnahmevorrichtung eine Armierung zur Erhöhung der Tragkraft auf, welche von einem Mantel umhüllt ist. Die Armierung ist aus einem härteren Werkstoff ausgeführt als der Mantel, insbesondere aus einem Werkstoff mit einer höheren Festigkeit. Die Armierung kann in Form einer Metall-, insbesondere Stahlarmierung, im Sinne einer Stahlseele im Inneren, bestehen oder aus einem faserverstärkten Werkstoff. Der Mantel des Schiebeteils bzw. der Aufnahmevorrichtung ist vorzugsweise aus einem Kunststoff hergestellt. Eine besonders zuverlässige Verbindung mit der Aufnahmevorrichtung wird erreicht, wenn ein Rastelement, insbesondere eine Stahlfeder, einteilig mit der Armierung ausgebildet ist, das mit einer entsprechenden Rastausnehmung der Aufnahmevorrichtung verrastbar ist. Dabei sind das Rastelement und die Rastausnehmung so gestaltet, dass in der Rastposition auch die elektrischen Kontakte hergestellt sind. So wird durch das Verrasten sowohl eine sichere mechanische Verbindung als auch eine sichere elektrische Verbindung zwischen der Aufnahmevorrichtung und dem Schiebeteil bzw. dem damit verbundenen Anbauteil hergestellt.

In dem Schiebeteil sind bevorzugt Leiterbahnen angeordnet, welche die elektrischen Kontakte mit Anschlüssen des Anbauteils verbinden, wobei die Leiterbahnen vorzugsweise als Flachkabel oder Leiterzüge ausgeführt sind und innerhalb des Schiebeteils angeordnet sind. Besonders bevorzugt sind die Leiterbahnen auf die Armierung aufgebracht und von dem Mantel umhüllt. Auf diese Weise sind die Leiterbahnen gut geschützt im Inneren des Schiebeteils aufgenommen.

Gemäß einer weiteren bevorzugten Ausführungsform weist das Anbauteil eine weitere Aufnahmevorrichtung auf, welche zur lösbaren Verbindung mit einem Schiebeteil vorgesehen ist, welches einem an dem Anbauteil zu befestigenden weiteren Anbauteil zugeordnet ist, wobei die weitere Aufnahmevorrichtung in das Anbauteil mechanisch und elektrisch integriert ist. Als Beispiel für ein solches Anbauteil sei ein Spritzschutz oder Schutzblech für ein Fahrrad genannt, welches einerseits mittels der erfindungsgemäßen Anordnung, beispielsweise an der Gabelspreizung, vorn oder hinten an dem Fahrradrahmen befestigt ist, und andererseits selbst eine Aufnahmevorrichtung aufweist, in welche eine mit einem Schiebeteil versehene Beleuchtungseinrichtung, wie beispielsweise Rücklicht, Scheinwerfer und/oder Blinker einschiebbar ist. Auf diese Weise lassen sich vorteilhaft elektrisch und mechanisch verbundene Reihenschaltungen von Anbauteilen herstellen. Hierdurch läßt sich beispielsweise eine leitungsmäßige Verbindung von einer am Fahrzeug angeordneten Stromquelle, über eine erste Kupplungsvorrichtung von innerhalb dem Rahmen in das Schutzblech, durch eine Verkabelung im oder am Schutzblech, und über eine zweite Kupplungsanordnung vom Schutzblech zur Beleuchtungseinrichtung herstellen. Dabei kann die erfindungsgemäße Anordnung in vorteilhafter Weise mehrere Funktionen erfüllen, nämlich erstens die mechanische Verbindung des Anbauteils mit der Struktur, zweitens die Stromversorgung des Anbauteils, beispielsweise einer Beleuchtung, und drittens eine Datenübertragung, beispielsweise eine Fehlermeldung an einen Bordcomputer, wenn ein Leuchtkörper der Beleuchtung defekt ist.

Ein weiteres Beispiel für eine Reihenschaltung über mehrere Kupplungsvorrichtungen ist eine Tasche, die über eine erste Kupplungsvorrichtung mit der Struktur des Fahrzeugs verbunden ist und die innen eine zweite Kupplungsvorrichtung zum Anschluss eines Anbauteils, beispielsweise einer Batterie für einen elektrischen Antrieb oder Hilfsantrieb des Fahrzeugs aufweist. Nach einer weiteren Möglichkeit für eine solche Reihenschaltung mehrerer erfindungsgemäßer Anordnungen kann ein Anhänger vorgesehen sein, der über eine erste Kupplungsvorrichtung mit der Struktur des Fahrzeugs elektrisch und mechanisch verbunden ist, und der selbst eine Aufnahmevorrichtung zum Anschließen eines weiteren Anbauteils über ein Schiebeteil aufweist.

Gemäß einer weiteren bevorzugten Ausführungsform ist an einer Radaufnahme des Fahrzeugs, also beispielsweise an einer Vorder- und/oder einer Hinterradgabel, mindestens eine Aufnahmevorrichtung vorgesehen, welche zur Aufnahme eines Schiebeteils an einem Rad dient. Dies erlaubt die schnelle, einfache und lösbare Befestigung des Rades als Anbauteil an der Radaufnahme. Zur Befestigung von Rädern sind vorzugsweise zwei erfindungsgemäße Anordnungen je Radachse vorgesehen. Dabei wird das Vorder- bzw. Hinterrad mit seinen Schiebeteilen einfach in die entsprechenden Aufnahmevorrichtungen der Vorder- bzw. Hinterradgabel eingeschoben. Dabei wird gleichzeitig eine mechanische und eine elektrische Verbindung zwischen dem Rad und der Gabel bzw. dem Fahrradrahmen hergestellt. Die Ausführungsform erlaubt vorteilhaft eine Datenübertragung bzw. die Übertragung elektrischer Signale zwischen dem Rad und dem Leitungsnetz des Fahrzeugs, beispielsweise von Sensoren zur Überwachung des Luftdrucks in den Reifen oder von Sensoren zur Ermittlung der Fahr- bzw. Drehgeschwindigkeit des Rades.

Besonders bevorzugt weist die Anordnung einen Adapter auf, der zur Anpassung unterschiedlicher Größen des Schiebeteils und der Aufnahmevorrichtung vorgesehen ist und elektrische Leiterbahnen zur Durchkontaktierung von der Aufnahmevorrichtung zu dem Schiebeteil aufweist. Bevorzugt werden mindestens zwei verschiedene Größen von Aufnahmevorrichtungen und Schiebeteilen an einem Fahrzeug verwendet, beispielsweise eine große Aufnahmevorrichtung für ein Spritzschutzblech und eine kleine Aufnahmevorrichtung für ein Rücklicht. Um bei trockenem Wetter das Rücklicht mit dem kleinen Schiebeteil an der großen Aufnahmevorrichtung für das nicht benötigte Schutzblech zu befestigen, wird vorteilhaft der Adapter verwendet, der eine elektrische Kontaktierung des Rücklichts erlaubt. Besonders günstig ist es, die größere, erste Aufnahmevorrichtung derart zu gestalten, dass sie eine der zweiten, kleineren Aufnahmevorrichtungen aufnehmen kann. So kann auf einen separaten Adapter verzichtet werden.

In einem verbundenen Zustand von Schiebeteil und Aufnahmevorrichtung ist mittels der Schnittstelle über elektrische Kontakte des Schiebeteils, insbesondere mit entsprechenden Gegenkontakten der Schnittstelle der Aufnahmevorrichtung, eine Verbindung mit dem Anbauteil herstellbar. Das Fahrzeug ist bevorzugt ein Zweirad oder dreirädriges Fahrzeug, insbesondere ein Fahrrad, Fahrrad mit Hilfsmotor, Roller, Motorrad oder bei vierrädrigen Fahrzeugen ein Quad oder Elektromobil.

Gemäß einer bevorzugten Ausführungsform ist eine Mehrzahl von Aufnahmevorrichtungen in die Struktur des Fahrzeugs integriert. Dadurch lassen sich an verschiedenen Stellen Anbaugeräte mit dem Leitungsnetz verbinden, welches vorzugsweise sowohl zur Übertragung von Daten, als auch zur Spannungsversorgung geeignet ist. Besonders bevorzugt sind die Aufnahmevorrichtungen untereinander durch das Leitungsnetz vernetzt. Besonders bevorzugt wird ein elektrischer Antrieb des Fahrzeugs über das Leitungsnetz gespeist, wobei insbesondere ein Antriebsmotor, ein Dynamo, insbesondere Nabendynamo, ein Getriebe und/oder mindestens eine Bremse in das Leitungsnetz eingebunden sind und wobei eines oder mehrere dieser Anbauteile mittels der erfindungsgemäßen Anordnung mit dem Fahrzeug verbunden sind. Nach einer bevorzugten Ausgestaltung sind die in die Struktur des Fahrzeugs integrierten Aufnahmevorrichtungen alle untereinander elektrisch verbunden, so dass elektrischer Strom bzw. elektrische Daten von jeder der Aufnahmevorrichtungen eingespeist bzw. abgenommen werden kann.

Nach einer möglichen Weiterbildung können die Kupplungsvorrichtungen unterschiedliche Baugrößen aufweisen. Dabei weist ein Teil der Aufnahmevorrichtungen eine von den übrigen Aufnahmevorrichtungen unterschiedliche Größe auf, wobei die Aufnahmevorrichtungen jeweils mit Schiebeteilen von entsprechender Größe verbindbar sind. Vorzugsweise sind die größeren und kleineren Kupplungsvorrichtungen so gestaltet, dass die Aufnahmevorrichtung einer kleineren ersten Kupplungsvorrichtung mit der Aufnahmevorrichtung einer größeren zweiten Kupplungsvorrichtung durch Einschieben elektrisch und mechanisch verbindbar ist. Dabei bildet die Aufnahmevorrichtung der kleineren Kupplungsvorrichtung das Schiebeteil für die größere Kupplungsvorrichtung. Dabei sind die größeren und kleineren Kupplungsvorrichtungen so gestaltet, dass bei Verrasten der kleineren Aufnahmevorrichtung in einer größeren Aufnahmevorrichtung gleichzeitig auch die elektrischen Kontakte bzw. die Datenkontakte hergestellt werden. So wird durch das Verrasten sowohl eine sichere mechanische Verbindung als auch eine sichere elektrische Verbindung zwischen den beiden Kupplungsvorrichtungen hergestellt.

Gemäß einer weiteren bevorzugten Ausführungsform ist mindestens ein Bauteil, welches zu der Struktur des Fahrzeugs zählt, als Aufnahmevorrichtung ausgeführt. Ein Beispiel für ein solches Bauteil ist eine Vorbaukappe für den Fahrradlenker.

Gemäß einer weiteren bevorzugten Ausführungsform ist das Anbauteil ein Anhänger, welcher mittels des Schiebeteils an die Aufnahmevorrichtung ankoppelbar ist.

Nachfolgend wird die Erfindung anhand von Zeichnungen näher erläutert. Die Ausführungen sind lediglich beispielhaft und schränken den allgemeinen Erfindungsgedanken nicht ein.

Es zeigen
- Figur 1: eine schematische Darstellung einer erfindungsgemäßen Anordnung zur Verbindung von Anbauteilen mit einem Fahrzeug;
- Figur 2: eine Aufnahmevorrichtung gemäß Figur 1 in Detailansicht;
- Figur 3: ein Schiebeteil gemäß Figur 1 in Detailansicht;
- Figur 4: ein Anbauteil mit zugeordnetem Schiebeteil gemäß Figur 1 in Detailansicht;
- Figur 5: ein erfindungsgemäßes Fahrzeug mit mindestens einer Aufnahmevorrichtung;
- Figur 6: ein Einzelteil des Fahrzeugs im Detail;
- Figur 7: eine weitere Ausführungsform der Aufnahmevorrichtung;
- Figur 8: eine Teilansicht einer Ausführungsform der erfindungsgemäßen Anordnung in einer perspektivischen Ansicht;
- Figur 9: eine Teilansicht einer Ausführungsform des erfindungsgemäßen Anordnung in einer teilweise geschnitten dargestellten Ansicht;
- Figur 10: die Ausführungsform der erfindungsgemäßen Anordnung gemäß Figuren 8 und 9 mit Schiebeteil;
- Figur 11: eine weitere Ausführungsform einer erfindungsgemäßen Anordnung und
- Figur 12: eine Detailansicht des Schiebeteils gemäß Figur 11 in einer teilweise geschnitten dargestellten Ansicht.

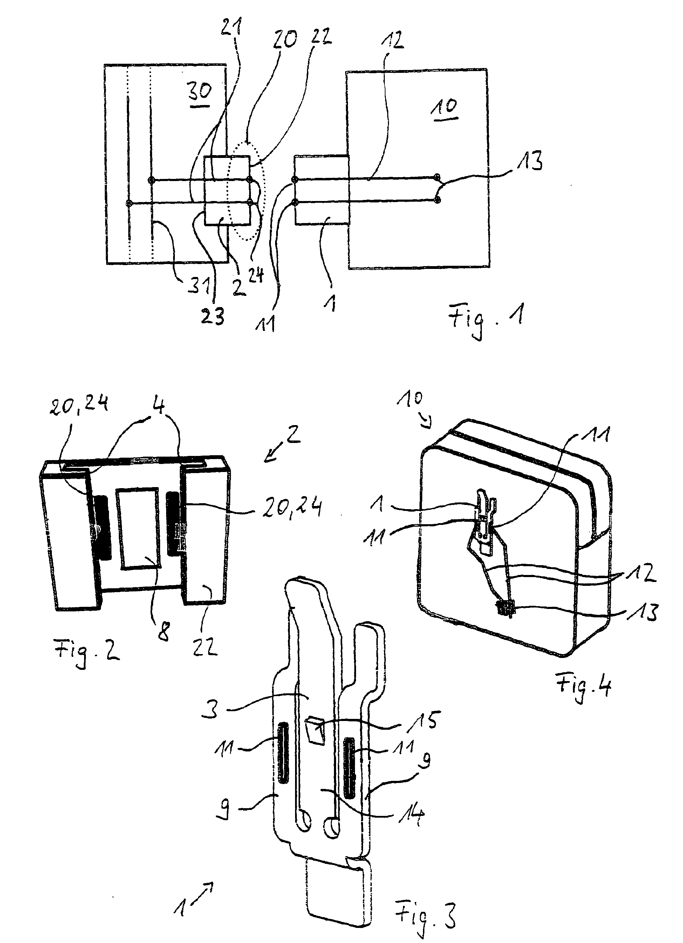

In der Figur 1 ist eine schematische Darstellung einer erfindungsgemäßen Anordnung zur Verbindung eines Anbauteils 10 mit einem Fahrzeug, von dem eine Struktur 30 sichtbar ist, dargestellt. Bei dem Fahrzeug handelt es sich vorzugsweise um ein einspuriges Fahrzeug, insbesondere ein Fahrrad, ein Fahrrad mit Hilfsmotor oder ein sonstiges motorisiertes Zweirad, wie beispielsweise einen Roller. Der Fachmann erkennt, daß die Erfindung auch auf mehrspurige Fahrzeuge, insbesondere dreirädrige oder vierrädrige Fahrzeuge, insbesondere sogenannte Quads anwendbar ist. Unter der Struktur 30 des Fahrzeugs ist somit eine Karosserie, ein Chassis oder insbesondere ein Rahmen, beispielsweise Rohrrahmen zu verstehen, sowie sämtliche in der Regel daran befestigte Bauteile, welche wesentlich für ein Fahrzeug sind, wie beispielsweise, bei einem Fahrrad, neben dem Rahmen auch die Gabel, die Lenkstange, deren Befestigungsvorrichtungen, die Sattelstange, der Sattel oder auch die Räder.

Die erfindungsgemäße Anordnung weist mindestens eine Aufnahmevorrichtung 2 auf, welche mit einem Schiebeteil 1 reversibel verbindbar ist. Die Aufnahmevorrichtung 2 ist mechanisch in die Struktur 30 des Fahrzeugs integriert und weist eine Schnittstelle 20 auf, welche zur elektrischen Kontaktierung eines innerhalb der Struktur 30 des Fahrzeugs angeordneten elektrischen Leitungsnetzes 31 des Fahrzeugs dient. Unter der Schnittstelle 20 ist jede technische Vorrichtung zu verstehen, die es erlaubt, einen elektrischen Kontakt zu dem Leitungsnetz 31 innerhalb der Struktur 30 von außerhalb der Struktur 30 herzustellen. Erfindungsgemäß führen dazu elektrische Leiterbahnen 21 von einer äußeren Kontaktseite 22 der Aufnahmevorrichtung 2 durch die Aufnahmevorrichtung 2 hindurch direkt in die Struktur 30 des Fahrzeugs hinein zu dem Leitungsnetz 31. Eine integrierte bzw. fest verbundene Seite 23 der Aufnahmevorrichtung 2 ist der Struktur 30 zugewandt oder kann, wie abgebildet, in diese hineinragen. Die Aufnahmevorrichtung 2 beziehungsweise die Schnittstelle 20 sind somit erfindungsgemäß sowohl mechanisch als auch elektrisch in die Struktur 30 des Fahrzeugs beziehungsweise dessen Leitungsnetz 31 integriert.

Derartige Aufnahmevorrichtungen 2 sind vorzugsweise an mehreren geeigneten Stellen an einem Fahrzeug angeordnet. Die lösbare Verbindung des Schiebeteils 1 mit der Aufnahmevorrichtung 2 wird später ausführlich dargestellt. Das Schiebeteil 1 weist elektrische Kontakte 11 auf, welche bei der Verbindung mit der Aufnahmevorrichtung 2 einen Kontakt mit der Schnittstelle 20 herstellen, welche dazu an der äußeren Kontaktseite 22 ebenfalls elektrische Kontakte 24 aufweist. Das Schiebeteil 1 ist einem Anbauteil 10 zugeordnet, wobei beide Teile einstückig ausgeführt sein können oder miteinander verbundene separate Teile sein können. Bei dem Anbauteil 10 handelt es sich um eine beliebige Ausstattung, welche mit einem Fahrzeug verbunden werden kann, beispielsweise Beleuchtung, Blinker, Tachometer, sogenannter Bordcomputer oder Fahrradcomputer, Mobiltelefone, GPS-Systeme, Navigationsgeräte, Batterien, Taschen, Körbe, Koffer, Schutzbleche, Gepäckträger, Ständer oder auch Anhängerkupplungen oder Anhänger. Von den elektrischen Kontakten 11 des Schiebeteils 1 erstrecken sich Leiterbahnen 12 durch das Schiebeteil 1 in das Anbauteil 10, wo eine Anschlußmöglichkeit 13 gegeben ist. Der Fachmann erkennt, daß die Anschlußmöglichkeit 13 von der Art des Anbauteils 10 abhängt.

In der Figur 2 ist eine Aufnahmevorrichtung 2 im Detail von der äußeren Kontaktseite 22 her dargestellt. Die Aufnahmevorrichtung 2 weist zwei Hinterschneidungen 4 auf, in welche ein entsprechendes Schiebeteil 1 (siehe Figur 3) eingeschoben werden kann. Eine Rastausnehmung 8 erlaubt das Einrasten eines federnden Rastelements, welches nachfolgend im Zusammenhang mit Figur 3 näher beschrieben wird. Die Rastausnehmung 8 ist mittig zwischen den beiden Hinterschneidungen 4 angeordnet. Zur Bildung der Schnittstelle 20 weist die Aufnahmevorrichtung 2 in dem dargestellten Ausführungsbeispiel zwei elektrische Kontakte 24 auf, welche mit entsprechenden elektrischen Kontakten 11 eines Schiebeteils 1 zur Herstellung einer elektrisch leitfähigen Verbindung zusammenwirken.

In der Figur 3 ist ein Schiebeteil 1 in einer möglichen Ausführungsform in Detailansicht dargestellt. Das Schiebeteil 1 weist ein federndes Rastelement 3 auf, welches hier von einer federnden Lasche 14 mit einer Rastnase 15 gebildet wird, welche in die Rastausnehmung 8 der Aufnahmevorrichtung 2 gemäß Figur 2 einrastet, wenn das Schiebeteil 1 gemäß Figur 3 in die Aufnahmevorrichtung 2 gemäß Figur 2 eingeschoben wird. Stege 9 des Schiebeteils 1 bilden dabei mit den Hinterschneidungen 4 der Aufnahmevorrichtung 2 eine formschlüssige Verbindung. Elektrische Kontakte 11 am Schiebeteil 1 sind so an den Stegen 9 angeordnet, daß diese mit den elektrischen Kontakten 24 des Schiebeteils 1 eine elektrisch leitende Verbindung herstellen, sobald das Schiebeteil 1 in die Aufnahmevorrichtung 2 eingeschoben ist und die Rastnase 15 mit der Rastausnehmung 8 verrastet ist. Das Rastgeräusch zeigt dem Benutzer an, dass eine mechanische und elektrische Verbindung zwischen dem Schiebeteil 1 bzw. dem zugeordneten Anbauteil und der Aufnahmevorrichtung 2 hergestellt ist.

In der Figur 4 ist ein Anbauteil 10 mit einem zugeordneten Schiebeteil 1 dargestellt. Das Anbauteil 10 ist im dargestellten Beispiel eine Tasche, beispielsweise zur Aufnahme eines elektronischen Geräts, wie beispielsweise eines Mobilfunktelefons. Von den elektrischen Kontakten 11 des Schiebeteils 1 verlaufen Leiterbahnen 12 bis zu einem Anschluß 13 des Anbauteils 10, wobei der Anschluß im dargestellten Ausführungsbeispiel zur Aufladung eines Akkumulators des Mobilfunktelefons vorgesehen ist. Weiterhin wäre denkbar, den Anschluss 13 als erfindungsgemäße Aufnahmevorrichtung 2 auszuführen, um beispielsweise eine Batterie daran anschließen zu können.

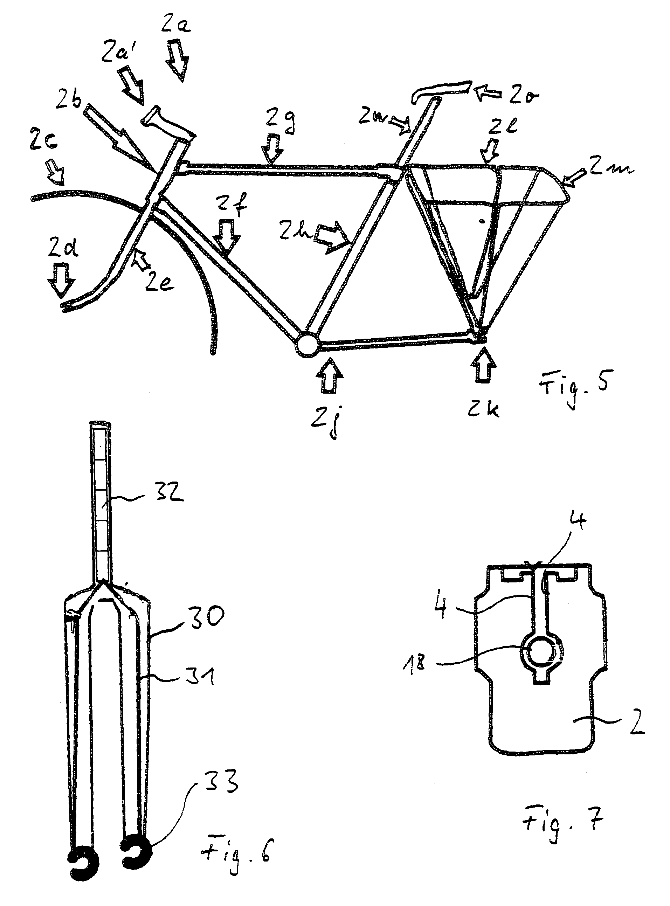

In der Figur 5 ist beispielhaft eine Struktur 30 eines Fahrzeugs, hier eines Fahrrads dargestellt. An den mit Pfeilen 2 a-o markierten Kontaktpunkten an der Struktur 30 können erfindungsgemäße Aufnahmevorrichtungen 2 in die Struktur 30 integriert sein. Dies erlaubt das Anschließen verschiedenartiger Anbauteile 10, beispielsweise gemäß Figur 4, welche ein Schiebeteil 1 aufweisen. Folgende Kontaktpunkte sind dargestellt:
Pfeil 2a: Kontaktpunkt im oder am Fahrradlenker.
Pfeil 2a': Kontaktpunkt in der Vorbaukappe des Fahrradlenkers.
Pfeil 2b: Kontaktpunkt im oder am Steuerrohrrahmen des Fahrradrahmens.
Pfeil 2c: Kontaktpunkte im oder am Schutzblech des Vorderrades am Fahrrad.
Pfeil 2d: Kontaktübertragungspunkt an der Fahrradvordergabel zur Achse ohne Aufnahmevorrichtung.
Pfeil 2e: Kontaktpunkt in oder an der Vordergabel des Fahrrades.
Pfeil 2f: Kontaktpunkt im oder am Unterrohrrahmen des Fahrradrahmens.
Pfeil 2g: Kontaktpunkt im oder am Oberrohrrahmen des Fahrradrahmens.
Pfeil 2h: Kontaktpunkt im oder am Sattelrohrrahmen des Fahrradrahmens.
Pfeil 2j: Kontaktpunkt im oder am Unterrohrrohrrahmen für den Ständer oder Schutzblechaufnahme des Fahrradrahmens.
Pfeil 2k Kontaktübertragungspunkt am Fahrradhinterbaugabel zur Achse ohne Aufnahmevorrichtung.
Pfeil 2l: Kontaktpunkt im oder am Schutzblech des Hinterrades am Fahrrad.
Pfeil 2m: Kontaktpunkt im oder am Gepäckträger des Fahrrades.
Pfeil 2n: Kontaktpunkten im oder an der Sattelstütze am Fahrrad.
Pfeil 2o: Kontaktpunkt im oder am Sattel des Fahrrades.

In der Figur 6 ist eine Fahrradvordergabel als Teil der Struktur 30 eines Fahrrads schematisch dargestellt. In dem Schaft ist eine innenliegende Batterie 32 angeordnet, welche über das Leitungsnetz 31 mit den Aufnahmevorrichtungen 2 gemäß Figur 5 verbunden sein kann. Die Achsaufnahme 33 für die Vorderradachse ist ebenfalls an das Leitungsnetz 31 angebunden, um einen Nabendynamo (nicht dargestellt) in das Leitungsnetz 31 einzubinden. Des weiteren sind vorzugsweise ein elektrischer Antriebsmotor, sowie gegebenenfalls ein Getriebe (beide nicht dargestellt) in das Leitungsnetz 31 eingebunden. An einer hinteren Gabel des Fahrrads kann ebenso ein Nabendynamo und/oder ein Antriebsmotor und/oder ein Getriebe und/oder eine Bremse (nicht dargestellt) angeordnet sein, welche in das Leitungsnetz 31 zur Strom- bzw. Datenübertragung eingebunden sind.

In der Figur 7 ist ein weiteres Ausführungsbeispiel für eine Aufnahmevorrichtung 2 dargestellt, welche eine Befestigungsausnehmung 18 zur Verbindung mit dem Rahmen 30, siehe Figur 5, aufweist. Die dargestellte Aufnahmevorrichtung 2 weist die Form einer Flaschenhalterung, beispielsweise zur Anbringung an Kontaktpunkt 2h gemäß Figur 5, auf. Die Aufnahmevorrichtung 2 weist im übrigen zwei Hinterschneidungen 4 zur Aufnahme eines Schiebeteils 1, beispielsweise gemäß Figur 3, bzw. eines einem Anbauteil 10 gemäß Figur 4 zugeordneten Schiebeteils 1, auf. Als Anbauteil 10 ist beispielsweise eine Heiz- oder Kühlvorrichtung denkbar, um die Trinkflasche zu temperieren.

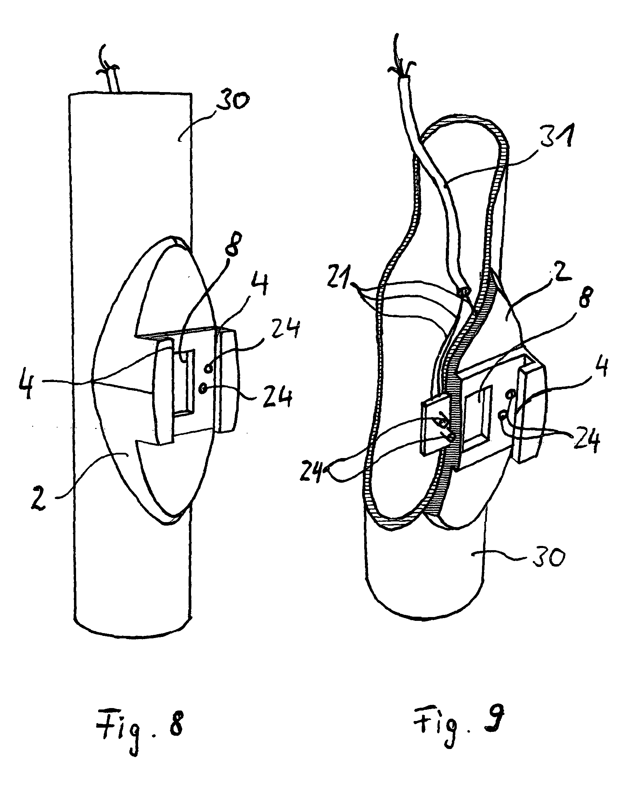

In den Figuren 8 und 9 ist eine weitere Ausführungsform der erfindungsgemäßen Anordnung dargestellt, wobei von dem Fahrzeug lediglich ein Teil der Struktur 30 beispielhaft dargestellt ist. Die Figur 8 zeigt eine Aufnahmevorrichtung 2, welche in die Struktur 30 mechanisch integriert ist, beispielsweise durch Vernieten, Verschweißen, Löten oder Verkleben beider Bauteile oder durch sonstige dem Fachmann geläufige Möglichkeiten, eine mechanisch feste, dauerhafte Verbindung zwischen beiden Bauteilen herzustellen. Die Aufnahmevorrichtung 2 weist zwei Hinterschneidungen 4 auf, sowie eine Rastausnehmung 8. Zwei elektrische Kontakte 24 sind sichtbar, wobei zwei weitere elektrische Kontakte verdeckt sind. Es stehen in der dargestellten Ausführungsform also vier elektrische Kontakte 24 zur Verfügung, was beispielsweise neben einer Spannungsversorgung über zwei dieser elektrischen Kontakte zusätzlich die Übertragung von Informationen in Form von elektrischen Signalen über die verbleibenden zwei elektrischen Kontakte 24 erlaubt.

In der Figur 9 ist die Anordnung gemäß Figur 8 in einer teilweise geschnittenen Darstellung abgebildet. In dieser Darstellung sind die vier elektrischen Kontakte 24 sichtbar, sowie deren Anbindung in das Leitungsnetz 31 innerhalb der Struktur 30 durch vier Leiterbahnen 21, welche direkt von der Aufnahmevorrichtung 2 in die Struktur 30 hineingeführt sind. Der Fachmann erkennt, daß die Struktur 30 dazu entsprechende Durchbrüche aufweist, welche eine Durchführung der Leiterbahnen 21 ermöglichen. Diese Ausnehmungen sind an dem Fahrzeug nicht zu sehen, da diese von der Aufnahmevorrichtung 2 verdeckt werden. Gemäß einer bevorzugten Ausführungsform weisen die Leiterbahnen 21 endseitig angeordnete Stecker (nicht dargestellt) zur Verbindung mit dem Leitungsnetz 31 auf, welches entsprechende Anschlussmöglichkeiten für die Stecker aufweisen kann.

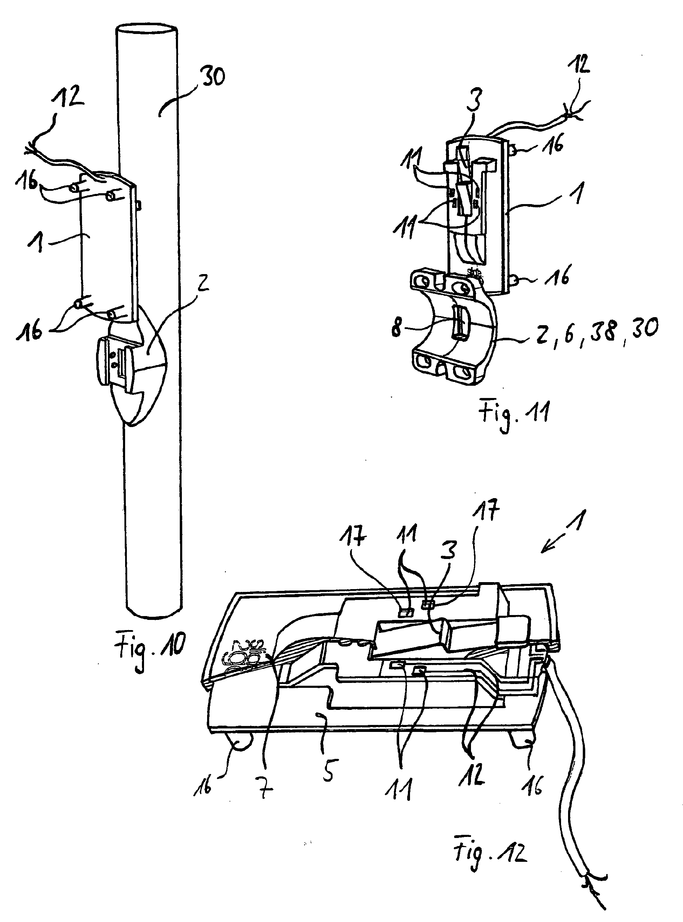

In der Figur 10 ist die Ausführungsform der erfindungsgemäßen Anordnung nach Figur 8 bzw. 9 zusammen mit einem Schiebeteil 1 dargestellt, wobei das Fahrzeug wiederum nur mit einem Teil der Struktur 30 angedeutet ist, an dem eine Aufnahmevorrichtung 2 gemäß Figuren 8 und 9 angeordnet ist. Das Schiebeteil 1 ist in einer nicht mit der Aufnahmevorrichtung 2 verbundenen Position dargestellt, welches jedoch durch Einschieben in die Aufnahmevorrichtung 2 in eine verbundene Position gebracht werden kann. Das Schiebeteil 1 ist ohne ein Anbauteil 10 (vgl. Figur 4) abgebildet, weshalb die Leiterbahnen 12 hier getrennt dargestellt sind. Das Schiebeteil weist Ausformungen 16 auf, welche beispielsweise zur Verbindung mit einem hier nicht dargestellten Anbauteil geeignet sind.

In der Figur 11 ist eine weitere Ausführungsform der erfindungsgemäßen Anordnung dargestellt, wobei das Schiebeteil 1 identisch mit dem Schiebeteil aus Figur 10 ist. In der Darstellung sind an dem Schiebeteil 1 neben den nicht verbundenen Leiterbahnen 12 und den Ausformungen 16 auch das Rastelement 3, sowie vier elektrische Kontakte 11 zur Herstellung einer elektrisch leitenden Verbindung mit der Schnittstelle 20 (vgl. Figur 1) sichtbar. Die Aufnahmevorrichtung 2 unterscheidet sich dahingehend von dem zuvor beschriebenen Ausführungsbeispiel, daß es sich bei der hier dargestellten Aufnahmevorrichtung 2 um ein Bauteil 38 der Struktur 30 (hier nicht dargestellt) handelt, nämlich um eine Befestigungsvorrichtung bzw. Vorbaukappe für eine Lenkstange. Das Bauteil 38 stellt eine Armierung 5 dar welche beispielsweise noch mit einem dünnen Kunststoffmantel umhüllt wird. Die Aufnahmevorrichtung 2 ist hier unmittelbar als Strukturteil des Fahrzeugs ausgebildet. Die Aufnahmevorrichtung 2 weist dazu eine Rastausnehmung 8 auf, welche ein Einrasten des Rastelements 3 des Schiebeteils 1 ermöglicht. Die elektrischen Kontakte und Leiterbahnen der Schnittstelle sind hier nicht dargestellt, entsprechen aber im wesentlichen denen der in Figur 9 dargestellten Aufnahmevorrichtung.

In der Figur 12 ist das Schiebeteil 1 gemäß Figuren 10 und 11 teilweise geschnitten, als Detail dargestellt. Das Schiebeteil 1 weist eine Armierung 5, beispielsweise aus Metall oder aus faserverstärktem Kunststoff auf, welche von einem Mantel 7, beispielsweise aus Kunststoff, umschlossen ist. Das Rastelement 3 ist mit der Armierung verbunden, insbesondere einteilig an diesem angeformt. Die elektrischen Kontakte 11, sowie die Leiterbahnen 12 sind ebenfalls auf der Armierung 5 aufgebracht, wobei der Mantel 7 Ausnehmungen 17 aufweist, welche eine Kontaktierung der darunterliegenden elektrischen Kontakte 11 erlauben. Die Ausformungen 16 sind ebenfalls mit der Armierung 5 des Schiebeteils 1 verbunden, welche eine sichere Verbindung mit einem Anbauteil 10 (nicht dargestellt), erlauben.

### Bezugszeichenliste

- 1: Schiebeteil
- 2: Aufnahmevorrichtung
- 3: Rastelement
- 4: Hinterschneidung
- 5: Armierung des Schiebeteils
- 6: Armierung der Aufnahmevorrichtung
- 7: Mantel
- 8: Rastausnehmung
- 9: Steg
- 10: Anbauteil
- 11: Elektrischer Kontakt
- 12: Leiterbahn
- 13: Anschluss des Anbauteils
- 14: Lasche
- 15: Rastnase
- 16: Ausformungen
- 17: Ausnehmungen im Mantel
- 18: Befestigungsausnehmung
- 20: Schnittstelle
- 21: Leiterbahn
- 22: äußere Kontaktseite
- 23: integrierte Seite
- 24: elektrischer Kontakt
- 30: Struktur des Fahrzeugs
- 31: Leitungsnetz
- 32: Batterie
- 33: Achsaufnahme
- 38: Strukturbauteil

## Patentansprüche

1. Fahrzeug, insbesondere einspuriges Fahrzeug, mit mindestens einer Aufnahmevorrichtung (2),
wobei die Aufnahmevorrichtung zur lösbaren Verbindung mit einem Schiebeteil (1) vorgesehen ist, welches einem an dem Fahrzeug zu befestigenden Anbauteil (10) zugeordnet ist,
wobei die Aufnahmevorrichtung (2) eine Schnittstelle (20) zur elektrischen Kontaktierung eines innerhalb der Struktur (30) des Fahrzeugs angeordneten elektrischen Leitungsnetzes (31) des Fahrzeugs bildet, in welches die Schnittstelle (20) integriert ist, wobei elektrische Leiterbahnen (21) von der Aufnahmevorrichtung (2) direkt in die Struktur (30) des Fahrzeugs führen,
wobei mittels der Schnittstelle (20) in einem verbundenen Zustand von Schiebeteil (1) und Aufnahmevorrichtung (2) über elektrische Kontakte (11) des Schiebeteils eine elektrische Verbindung mit dem Anbauteil (10) herstellbar ist, **dadurch gekennzeichnet,**
**dass** die Aufnahmevorrichtung (2) in eine Struktur (30) des Fahrzeugs mechanisch integriert ist, wobei eine mechanisch feste, unlösbare Verbindung zwischen der Aufnahmevorrichtung und der Struktur des Fahrzeugs besteht, oder ein Teil der Struktur des Fahrzeugs als Aufnahmevorrichtung ausgeführt ist.

2. Fahrzeug nach Patentanspruch 1, **dadurch gekennzeichnet, dass** eine Mehrzahl von Aufnahmevorrichtungen (2) in der Struktur (30) des Fahrzeugs integriert ist.

3. Fahrzeug nach einem der Patentansprüche 1 oder 2, **dadurch gekennzeichnet, dass** ein Teil der Aufnahmevorrichtungen (2) eine von den übrigen Aufnahmevorrichtungen unterschiedliche Größe aufweist, wobei die Aufnahmevorrichtungen jeweils mit Schiebeteilen (1) von entsprechender Größe verbindbar sind.

4. Fahrzeug nach einem der Patentansprüche 1 bis 3, **dadurch gekennzeichnet, dass** mindestens ein Bauteil (38), welches zu der Struktur (30) des Fahrzeugs zählt, als Aufnahmevorrichtung (2) ausgeführt ist.

5. Fahrzeug nach einem der Patentansprüche 1 bis 4, **dadurch gekennzeichnet, dass** das Anbauteil (10) ein Anhänger ist, welcher mittels des Schiebeteils (1) an die Aufnahmevorrichtung (2) ankuppelbar ist.

6. Fahrzeug nach einem der Patentansprüche 1 bis 5, **dadurch gekennzeichnet, dass** eine Radaufnahme (30) vorgesehen ist, die mindestens eine Aufnahmevorrichtung (2) aufweist, welche zur Aufnahme eines zugehörigen Schiebeteils (1) an einem Rad dient, wobei das Rad durch Einschieben des Schiebeteils (1) in die Aufnahmevorrichtung (2) mit der Radaufnahme (30) elektrisch und mechanisch verbindbar ist.

7. Fahrzeug nach einem der Patentansprüche 1 bis 5, mit einer Anordnung zur Verbindung von Anbauteilen (10) mit dem Fahrzeug,
wobei die Anordnung mindestens ein dem Anbauteil zugeordnetes Schiebeteil (1) aufweist, welches mit mindestens einer der Aufnahmevorrichtungen (2) reversibel verbindbar ist,
wobei das Schiebeteil (1) elektrische Kontakte (11) aufweist, über welche das Anbauteil (10) in einem verbundenen Zustand von Schiebeteil (1) und Aufnahmevorrichtung (2) mit der Schnittstelle (20) verbunden ist.

8. Fahrzeug nach Patentanspruch 7. **dadurch gekennzeichnet, dass** das elektrische Leitungsnetz (31) Leitungen zur Spannungsversorgung und/oder Leitungen zur Signalübertragung aufweist.

9. Fahrzeug nach einem der Patentansprüche 7 oder 8, **dadurch gekennzeichnet, dass** das elektrische Leitungsnetz (31) Leitungen zur Spannungsversorgung eines elektrischen Antriebs des Fahrzeugs aufweist.

10. Fahrzeug nach einem der Patentansprüche 7 bis 9, **dadurch gekennzeichnet, dass** das Schiebeteil (1) in eine Hinterschneidung (4) der Aufnahmevorrichtung (2) einschiebbar und darin federnd verrastbar ist.

11. Fahrzeug nach einem der Patentansprüche 7 bis 10, **dadurch gekennzeichnet, dass** das Schiebeteil (1) und/oder die Aufnahmevorrichtung (2) eine Armierung (5, 6) zur Erhöhung der Tragkraft aufweist, welche von einem Mantel (7) umhüllt ist.

12. Fahrzeug nach einem der Patentansprüche 7 bis 11, **dadurch gekennzeichnet, dass** in dem Schiebeteil (1) Leiterbahnen (12) angeordnet sind, welche die elektrischen Kontakte (11) mit Anschlüssen (13) des Anbauteils (10) verbinden, wobei die vorzugsweise als Flachkabel oder Leiterzüge ausgeführten Leiterbahnen (12) innerhalb des Schiebeteils (1) angeordnet sind.

13. Fahrzeug nach Patentanspruch 12 kombiniert mit Patentanspruch 11, **dadurch gekennzeichnet, dass** die Leiterbahnen (12) auf die Armierung (5) aufgebracht und von dem Mantel (7) umhüllt sind.

14. Fahrzeug nach einem der Patentansprüche 7 bis 13, **dadurch gekennzeichnet, dass** das Anbauteil (10) eine weitere Aufnahmevorrichtung aufweist.

15. Fahrzeug nach einem der Patentansprüche 7 bis 14, **gekennzeichnet durch**, einen Adapter, der zur Anpassung verschiedener Größen des Schiebeteils (1) und der Aufnahmevorrichtung (2) vorgesehen ist und elektrische Leiterbahnen zur Durchkontaktierung von der Aufnahmevorrichtung zu dem Schiebeteil aufweist.

## Claims

1. Vehicle, especially single-track vehicle, having at least one support device (2),
wherein the support device is provided for the detachable connection to a sliding member (1), which is assigned to an attachment (10) mounted on the vehicle,
wherein the support device (2) forms an interface (20) for electrically contacting an electric line network (31) of the vehicle, arranged within the structure (30) of the vehicle and in which the interface (20) is integrated, wherein electric conductor paths (21) lead from the support device (2) directly into the structure (30) of the vehicle,
wherein an electrical connection to the attachment (10) is achievable in a connected condition of the sliding member (1) and the support device (2) by means of the interface (20) via electric contacts (11) of the sliding member,
**characterised in**
**that** the support device (2) is integrated mechanically into a structure (30) of the vehicle, wherein a mechanically firm, non-detachable connection exists between the support device and the structure of the vehicle, or a portion of the structure of the vehicle is formed as a support device.

2. Vehicle according to claim 1,
**characterised in**
**that** a multitude of support devices (2) is integrated into the structure (30) of the vehicle.

3. Vehicle according to one of claims 1 or 2,
**characterised in**
**that** a partial number of the support devices (2) have a different size to the residual support devices, wherein the support devices are connectable, respectively, to sliding members (1) of corresponding size.

4. Vehicle according to one of claims 1 to 3,
**characterised in**
**that** at least one component (38), which belongs to the structure (30) of the vehicle, is formed as a support device (2).

5. Vehicle according to one of claims 1 to 4,
**characterised in**
**that** the attachment (10) is a trailer, which is adapted to be coupled by means of the sliding member (1) to the support device (2).

6. Vehicle according to one of claims 1 to 5,
**characterised in**
**that** a wheel receptacle (30) is provided, which has at least one support device (2), which serves for accommodating a corresponding sliding member (1) on a wheel, wherein the wheel is electrically and mechanically connectable to the wheel receptacle (30) by means of inserting the sliding member (1) into the support device (2).

7. Vehicle according to one of claims 1 to 5, having an arrangement for connecting attachments (10) to the vehicle,
wherein the arrangement has at least one sliding member (1) assigned to the attachment, which is reversibly attachable to at least one of the support devices (2),
wherein the sliding member (1) has electric contacts (11), by means of which the attachment (10) is, in a connected condition of the sliding member (1) and the support device (2), connected to the interface (20).

8. Vehicle according to claim 7,
**characterised in**
**that** the electric lines network (31) has lines for the voltage supply and/or lines for the transmission of signals.

9. Vehicle according to one of claims 7 or 8,
**characterised in**
**that** the electric lines network (31) comprises lines for the voltage supply to an electric drive of the vehicle.

10. Vehicle according to one of claims 7 to 9,
**characterised in**
**that** the sliding member (1) is insertable into an undercut (4) of the support device (2) and is elastically lockable therein.

11. Vehicle according to one of claims 7 to 10,
**characterised in**
**that** the sliding member (1) and/or the support device (2) have a reinforcement (5, 6), which is enclosed by a casing (7), for increasing the load bearing capacity.

12. Vehicle according to one of claims 7 to 11,
**characterised in**
**that** in the sliding member (1) conductor strips (12) are arranged, which connect the electric contacts (11) to the connectors (13) of the attachment (10), wherein the conductor strips (12), formed preferably as flat cables or conductor tracks, are arranged within the sliding member (1).

13. Vehicle according to claim 12 combined with claim 11,
**characterised in**
**that** the conductor strips (12) are applied on the reinforcement (5) and are encased by the casing (7).

14. Vehicle according to one of claims 7 to 13,
**characterised in**
**that** the attachment (10) comprises a further support device.

15. Vehicle according to one of claims 7 to 14,
**characterised by**
an adapter, which is provided for adapting different sizes of the sliding member (1) and of the support device (2) and has electric strips for connecting through the support device to the sliding member.

## Revendications

1. Véhicule, en particulier véhicule à deux roues, avec au moins un dispositif de fixation (2)
pour lequel le dispositif de fixation est prévu pour une attacher amovible avec un élément coulissant (1), lequel est attribué à un accessoire (10) à fixer sur le véhicule,
pour lequel le dispositif de fixation (2) constitue une interface (20) pour le contact électrique d'un réseau électrique de liaisons (31) disposé à l'intérieur de la structure (30) du véhicule, dans lequel l'interface (20) est intégrée, pour lequel les chemins de conducteurs électriques (21) conduisent directement du dispositif de fixation (2) dans la structure (30) du véhicule,
pour lequel une liaison électrique avec l'accessoire (10) peut être établie au moyen de l'interface (20) dans un état raccordé de l'élément coulissant (1) et du dispositif de fixation (2) par le biais de contacts électriques (11) de l'élément coulissant,
**caractérisé en ce que**
le dispositif de fixation (2) est mécaniquement intégré dans une structure (30) du véhicule, pour lequel il existe une liaison mécaniquement fixe, non amovible entre le dispositif de fixation et la structure du véhicule ou une partie de la structure du véhicule est réalisée comme dispositif de fixation.

2. Véhicule selon la revendication 1 **caractérisé en ce qu'**une pluralité de dispositifs de fixation (2) est intégrée dans la structure (30) du véhicule.

3. Véhicule selon l'une quelconque des revendications 1 ou 2 **caractérisé en ce qu'**une partie des dispositifs de fixation (2) présente une taille différente des autres dispositifs de fixation, les dispositifs de fixation sont appropriés pour être reliés respectivement aux éléments coulissants (1) de taille correspondante.

4. Véhicule selon l'une quelconque des revendications 1 à 3 **caractérisé en ce qu'**au moins un composant (38), lequel fait partie de la structure (30) du véhicule, est réalisée comme dispositif de fixation (2).

5. Véhicule selon l'une quelconque des revendications 1 à 4 **caractérisé en ce que** l'accessoire (10) est une remorque, laquelle est apte à être attelée au dispositif de fixation (2) au moyen de l'élément coulissant (1).

6. Véhicule selon l'une quelconque des revendications 1 à 5 **caractérisé en ce qu'**un logement de roue (30) est prévu qui comporte au moins un dispositif de fixation (2) qui sert à la fixation d'un élément coulissant correspondant (1) sur une roue, la roue étant apte à être reliée électriquement ou mécaniquement au logement de roue (30) par engagement de l'élément coulissant (1) dans le dispositif de fixation (2).

7. Véhicule selon l'une quelconque des revendications 1 à 5 avec un agencement pour attacher des accessoires (10) avec le véhicule,
pour lequel l'agencement comporte au moins un élément coulissant (1) attribué à l'accessoire, lequel est apte à être attaché de façon réversible avec au moins un des dispositifs de fixation (2),
pour lequel l'élément coulissant (1) comporte des contacts électriques (11) par lesquels l'accessoire (10) est rattaché à l'interface (20) dans un état attaché de l'élément coulissant (1) et du dispositif de fixation (2).

8. Véhicule selon la revendication 7 **caractérisé en ce que** le réseau électrique de liaisons (31) comporte des lignes pour l'alimentation en tension et/ou des lignes pour la transmission de signaux.

9. Véhicule selon l'une quelconque des revendications 7 ou 8 **caractérisé en ce que** le réseau électrique de liaisons (31) comporte des lignes pour l'alimentation de tension d'un système d'entraînement électrique du véhicule.

10. Véhicule selon l'une quelconque des revendications 7 à 9 **caractérisé en ce que** l'élément coulissant (1) est apte à être engagé dans une découpe arrière (4) du dispositif de fixation (2) et y être enclenchée de manière faisant ressort.

11. Véhicule selon l'une quelconque des revendications 7 à 10 **caractérisé en ce que** l'élément coulissant (1) et/ou le dispositif de fixation (2) comporte une armature (5, 6) pour augmenter la force portante, laquelle est entourée d'une enveloppe (7).

12. Véhicule selon l'une des revendications 7 à 11 **caractérisé en ce que** des chemins de conducteurs (12) sont disposés dans l'élément coulissant (1) qui relient les contacts électriques (11) aux connexions (13) de l'accessoire (10), pour lequel les chemins de conducteurs (12), réalisées de préférence comme des câbles plats ou des jeux de conducteurs, sont disposés à l'intérieur de l'élément coulissant (1).

13. Véhicule selon la revendication 12 combinée à la revendication 11 **caractérisé en ce que** les chemins de conducteurs (12) sont appliqués sur l'armature (5) et sont entourés par l'enveloppe (7).

14. Véhicule selon l'une quelconque des revendications 7 à 13 **caractérisé en ce que** l'accessoire (10) comporte un autre dispositif de fixation.

15. Véhicule selon l'une quelconque des revendications 7 à 14 **caractérisé par** un adaptateur, qui est prévu pour l'adaptation de différentes tailles de l'élément coulissant (1) et du dispositif de fixation (2) et comporte des chemins de conducteurs électriques pour établir le contact du dispositif de fixation avec l'élément coulissant.
